# EUROPEAN PATENT SPECIFICATION

(11) **EP 0 799 115 B1**
(45) Date of publication and mention of the grant of the patent: **03.03.1999**
(21) Application number: 95941601.7
(22) Date of filing: 20.12.1995
(51) Int. Cl.: B25H 3/02, A01K 97/22, B25H 5/00

(54) **A STORAGE DEVICE, PREFERABLY FOR TOOLS, AND ACCESSORIES FOR MOUNTING ON THE STORAGE DEVICE**
VORRICHTUNG ZUM LAGERN VON WERKZEUGEN UND ZUBEHÖRTEILE ZUR MONTAGE AN DER LAGERVORRICHTUNG
DISPOSITIF DE RANGEMENT, DE PREFERENCE POUR OUTILS, ET ACCESSOIRES DESTINES A ETRE MONTES SUR LEDIT DISPOSITIF

(30) Priority: 21.12.1994 DK 145394
(43) Date of publication of application: 08.10.1997
(73) Proprietor: Madsen, Jens Ole, 5400 Bogense (DK)
(72) Inventor: Madsen, Jens Ole, 5400 Bogense (DK)
(74) Representative: Wittrup, Flemming
(86) International application number: DK9500510
(87) International publication number: WO9619326

(56) References cited:
- DE-A- 3 205 035
- GB-A- 2 241 940
- US-A- 2 433 305
- US-A- 3 099 398
- US-A- 4 366 998
- US-A- 4 744 613

## Description

The invention concerns a storage device, preferably for tools, comprising first and second storage boxes which are adapted to be fixed mutually, the first storage box having a carrier handle and legs and a lid which is pivotally attached to the first storage device, and covering the compartments of the box, and the first storage box having a top surface consisting of a seat, and the second storage box being fixable between the legs at the bottom of the first box.

US Patent Specification No. 5 193 706 discloses a storage device which consists of a box having a lid and is arranged such that the lid has a handle which is flush with the upper side of the lid, which is hinged to a box.

Further, a tool box which also has a lid where the handle is flush with the surface of the lid and is hinged to the box, which moreover has four legs, is available from the company Rubbermaid Incorporated, which is the proprietor of the above-mentioned US patent.

The latter tool box is special in that it may be used as a stool, thereby imparting greater versatility to the use of the tool box. However, it is a drawback that when the tool box is used as a stool, then the tools to be used must necessarily have been taken out of the box, since, otherwise, it will be necessary to descend from the stool of the tool box to take out the tools, which may be a not inconsiderable source of irritation.

US Patent Specification No. 4 744 613 discloses a combination of a tool box having two trays and a stool part, which could be fixed together on a handle bracket.

US Patent Specification No. 3 099 398 discloses a storage device of the type mentioned in the introductory part of claim 1. The second storage device consists of a slidable drawer, which rests on a support in the first device. No locking means between the first and second drawers is present.

The object of the invention is to improve the previously known tool boxes in such a manner as to provide greater versatility and thus a more user-friendly implement, which, in addition to serving as a tool box, may also serve as a stool, without the stool in use preventing access to the tools.

This is achieved according to the invention in that the storage device is characterized in that
the first storage box is moved vertically over the second storage box when fixed to the second storage box, and
that gripping means at each end of the first storage box are biased in such a way that the gripping means by snap action can grip on an edge on the underside of the underside of the second storage box.

Firstly, it is hereby ensured that even when the tool box is used as a stool, it is after the second box has been released easier to select tools directly from this box, also even when the user e.g. stands on the first one of the boxes. Secondly, if the lid is pivoted, then it is easy to reach all the tools in the first and second storage devices.

Additionally, it is expedient that the first storage box has securing means for accessories, said securing means being preferably provided on the legs of the box.

This provides the advantage that the versatility of the box may be improved considerably, since, as will appear from the following, it is possible to perform operations which have not been possible so far with the previously known universal storage devices.

It is also expedient that the lid is secured to the first storage box by one or more hinges, and that the hinge or hinges comprise three parts, the first part of which is secured to the lid, the second part is secured to the box, while the third part is pivotably connected with the first part and the second part, said third part being formed by a plate which has a width corresponding to the distance between the outer edge of the carrier handle and the pivot axis of the second part of the hinge or hinges.

It is hereby ensured that the lid may be opened and be caused to pivot down along one of the sides of the box, which is an advantage when, as stated in claim 4, the lid is formed as a tray having a bottom and four side walls to define a compartment which is divided fully or partly into a plurality of smaller compartments and/or has means for securing the tools.

In other words, in its open state the lid may now be used for securing tools, such as a hammer, screwdrivers, files, etc., which is extremely expedient precisely in connection with the stool function.

It is also expedient that the carrier handle is pivotably connected with the first box and has a width corresponding to the width of the side walls on the lid and a thickness corresponding to the distance between the outer side of the lid side walls and the outer side of the first box.

The carrier handle is hereby flush with the lid, which is an advantage in particular when the first box is used as a stool, since there is then no risk of the user falling over the handle or even crushing it by stepping on it.

To ensure that the first box may be used as a stool, it is expedient that the lid has a frictionally treated face on its outer surface, which is expedient in particular if the box is used e.g. in rainy weather, snowy weather and the like, where standing on the stool may involve a certain risk if it becomes slippery.

As stated in claim 7, it is expedient that the means for securing accessories are formed by slots serving to secure a saw, e.g. a handsaw, in one or more of the legs of the first box.

If, on the other hand, an even more versatile storage device is desired, this may be obtained in that the lid on the first box partly covers this box, and that the area of the first box which is not covered by the lid has a separate lid.

This provides the advantage that even when the user stands on the first box, he can still reach tools at the side of the box which has the separate lid.

According to the invention, it is also possible for the compartment of the first box to be equipped with a compartmentalized insert which centrally has a support part for cooperation with engagement means on a lid to cover the compartments of the tool box.

This gives a good cover of the compartments, which may be an advantage if the box, during transport, is handled a little roughly, without this involving the risk that e.g. nails and screws present in the compartment will get mixed. Finally, according to claim 9 it is expedient that the support part is adapted to cooperate with engagement means on an additional compartmentalized insert.

It is frequently so that tools are used on the floor, and it may be quite a strain to be on ones knees, e.g. a whole day. When, as stated in claim 10, provision has been made for storing a knee pad in the tool box, this drawback is obviated, said knee pad being easy to transport in the tool box and thus always "ready for use".

The invention will now be explained more fully below with reference to an embodiment of the invention which is shown in the drawing, in which
fig. 1 is a lateral view of the storage device of the invention,
fig. 2 is an end view of the storage device,
fig. 3 is an end view of the storage device, but with the lid partly open,
fig. 4 is an end view of the storage device, but with the lid completely open and pivoted down around the sides,
fig. 5 is an end view of the storage device with the handle in the carrying position,
fig. 6 shows an insert for the storage device of figs. 1-5,
fig. 7 shows an embodiment of an accessory to be mounted on the insert shown in fig. 6,
fig. 8 shows an additional accessory to be mounted on the accessory shown in fig. 7, and
fig. 9 shows an extended storage device according to figs. 1-5.

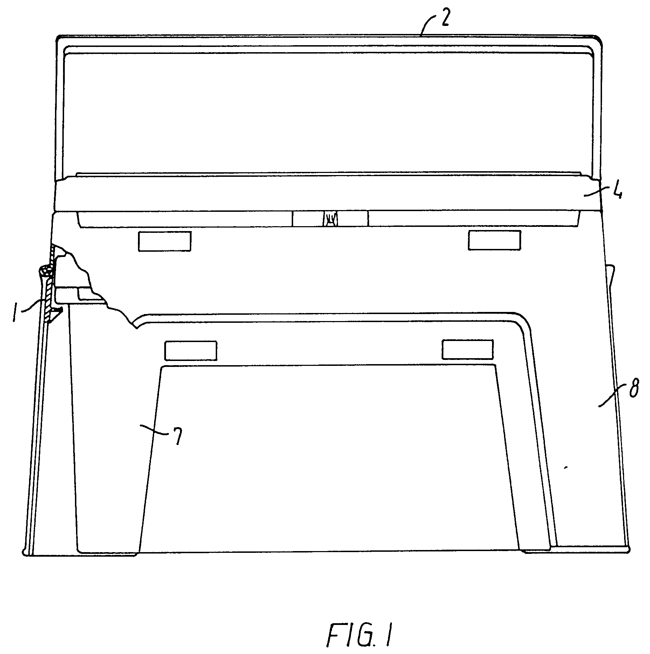

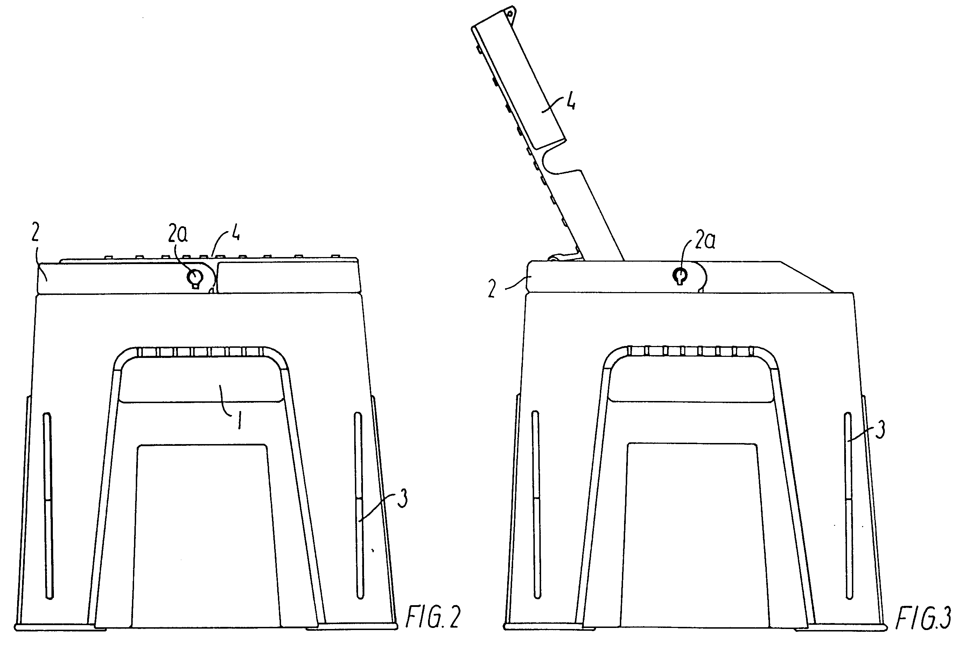

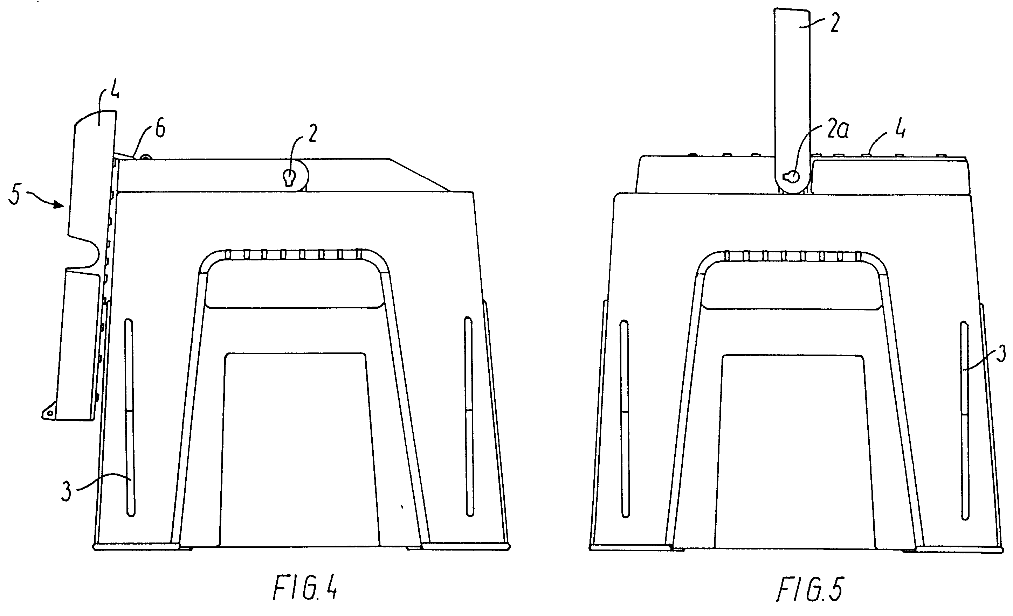

As will be seen in figs. 1 and 2, an inner box 7 is secured to an outer box by means of a fitting 1 at each end, which is capable of gripping the underside of an edge on the inner box 7. Preferably, the fitting is biased so that, when the outer box is placed over the inner box, it engages by snap action. Other attachments between the boxes are also possible. The outer box has legs 8 and a carrier handle 2 as well as a lid 4. It will be seen from fig. 2 that the legs 8 of the outer box are formed with slots 3 to receive accessories, as will be explained later. Figs. 3-5 show the storage device of the invention from the end and with the lid in different positions. As will be seen from figs. 3 and 4, the lid 4 is secured by means of a hinge 6 which is secured to the outer box and the lid 4. The hinge 6 consists of three parts, two parts of which are secured to the lid and the box, respectively, and which have pivot axes interconnected by means of a plate, so that when the lid is pivoted about the pivot axes, it will extend down along the side of the outer box, as the width of the plate is precisely so great that the lid does not hit the handle 2 of the box. The parts secured to the box may be plates with screw holes. Further, the lid may be removed, as the part of the hinge secured to the lid is formed with a snap engagement (not shown), such as a rod capable of being inserted into several gripper means.

It is moreover noted that the handle may be removed only when the lid has been removed, as the handle is provided with a pin which has a projection which cooperates with a correspondingly shaped hole in the box. The projection can thus engage the hole only when the handle is pivoted to the right in fig. 5, which can only be done if the lid 4 is removed. Fig. 5 moreover shows a hole 2a on the outer side of the handle which can receive a correspondingly shaped pin, e.g. for the fitting of a carrying strap. Handle and box have corresponding interconnection means, where the pin is provided on the inner side of the handle, while the hole is formed in the box.

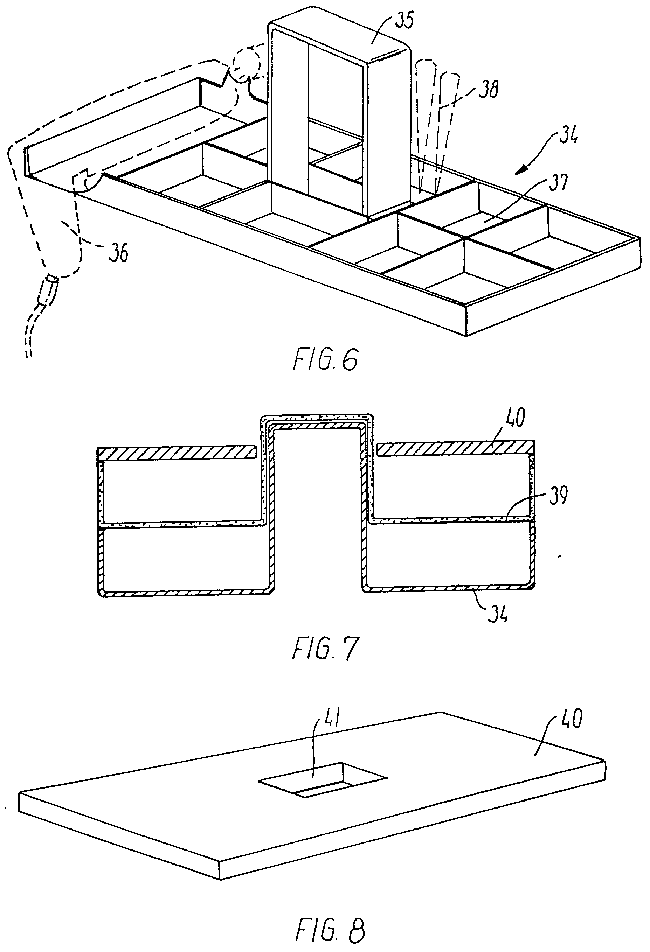

Fig. 6 shows a tray 34 intended to be positioned in the inner box 7. As will be seen, this tray 34 has a handle 35 surrounded by compartments 37 as well as a reception area for a drilling machine 36 or the like.

Fig. 7 shows the tray 34 in cross-section and with an additional tray 39 which may be "stacked" on the tray 34, said additional tray having a handle capable of receiving the handle of the tray 34, so that the compartments of the tray 34 are completely covered at the top. Further, the trays 34, 39 may be transported simultaneously by means of the handles. Finally, a so-called knee pad, which may be placed on the lid 39, is shown in fig. 7. This knee pad is also shown schematically in fig. 8 with a four-sided hole 41 which mates with the handle of the lid 39.

The knee pad may also serve as a sitting pad on the outer box, which is advantageous in case of outdoor use, in particular when it is cold. Finally, the knee pad serves as a lid for the additional tray.

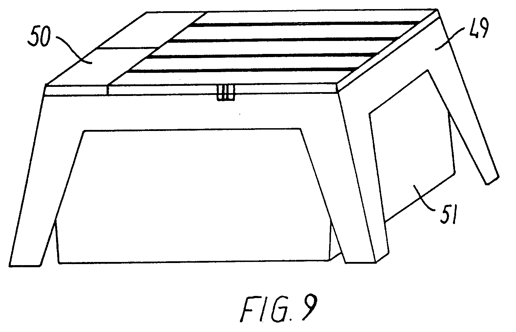

Fig. 9 shows an embodiment of the storage device of the invention. This embodiment is moreover provided with a compartment arrangement at the lid 50 on the outer box 49, so that when the outer box 49 is used as a stool, access may be had to the compartments of the lower box via the lid 50.

Although the invention has been described preferably in connection with tool boxes, nothing prevents the concept of the storage device of the invention from having many other applications. Examples of such applications include storage devices for fishing tackle, needlework, toys, medicine cabinets, etc.

## Claims

1. A storage device, preferably for tools, comprising:
a) first and second (7) storage boxes which are adapted to be fixed mutually,
b) the first storage box having a carrier handle (2) and legs (8) and a lid (4) which is pivotally attached to the first storage device and covering the compartments of the box, and
c) the first storage box having a top surface consisting of a seat, and
d) the second storage box (7) being fixable to the first storage box between the legs (8) at the bottom of the first box
**characterized** in
e) that the first storage box is moved vertically over the second storage box when fixed to the second storage box, and
f) that gripping means at each end of the first storage box are biased in such a way that the gripping means by snap action can grip on an edge on the underside of the underside of the second storage box.

2. A storage device according to claim 1, **characterized** in that the first storage box has securing means for accessories, said securing means being preferably provided on the legs of the box.

3. A storage device according to claim 1 or 2, **characterized** in that the lid (4) is secured to the first storage box by one or more hinges (6), and that the hinge or hinges comprise three parts, the first part of which is secured to the lid, the second part is secured to the box, while the third part is pivotably connected with the first part and the second part, said third part being formed by a plate which has a width corresponding to the distance between the outer edge of the carrier handle and a pivot axis of the second part of the hinge or hinges.

4. A storage device according to claims 1-3, **characterized** in that the lid (4) is formed as a tray having a bottom and four side walls to define a compartment which is divided fully or partly into a plurality of smaller compartments and/or has means for securing tools.

5. A storage device according to claims 1-4, **characterized** in that the carrier handle (2) is pivotably connected with the first box and has a width corresponding to the width of the side walls on the lid (4) and a thickness corresponding to the distance between the outer side of lid side walls and the outer side of the first box.

6. A storage device according to any of the preceding claims, **characterized** in that the lid (4) has a frictionally treated face on its outer surface.

7. A storage device according to any of claims 2-6, **characterized** in that the securing means for accessories are formed by slots (3) serving to secure a saw, e.g. a handsaw, in one or more of the legs of the first box.

8. A storage device according to claims 1-7, **characterized** in that the lid on the first box partly covers this box, and that the area of the first box which is not covered by the lid has a separate lid (50).

9. A storage device according to claims 1-8, **characterized** in that compartment of the first box is equipped with a compartmentalized insert which centrally has a support part for cooperation with engagement means on an additional compartmentalized insert.

10. A storage device according to claim 9, **characterized** in that the support part is adapted to cooperate with engagement means on a support device, e.g. a knee pad.

11. A storage device according to claims 1-10, **characterized** in that the second storage box also has a lid.

## Patentansprüche

1. Lagervorrichtung, vorzugsweise für Werkzeuge, mit:
a) einer ersten und einer zweiten (7) Lagerbox, die aneinander befestigbar sind,
b) wobei die erste Lagerbox einen Tragegriff (2) und Beine (8) sowie einen Deckel (4) aufweist, der schwenkbar an der ersten Lagervorrichtung angebracht ist und die Fächer der Box abdeckt, und
c) wobei die erste Lagerbox eine aus einem Sitz gebildete Oberseite hat, und
d) wobei die zweite Lagerbox (7) zwischen den Beinen (8) am Boden der ersten Lagerbox befestigbar ist,
dadurch gekennzeichnet,
e) daß die erste Lagerbox beim Befestigen an der zweiten Lagerbox vertikal über die zweite Lagerbox bewegt wird, und
f) daß Greifeirrichtungen an jedem Ende der ersten Lagerbox derart vorgespannt sind, daß die Greifeinrichtungen durch Schnappwirkung an der Unterseite eines Randes auf der Unterseite der zweiten Lagerbox angreifen können.

2. Lagervorrichtung nach Anspruch 1, dadurch gekennzeichnet, daß die erste Lagerbox Befestigungseinrichtungen für Zubehör aufweist, die vorzugsweise an den Beinen der Box angebracht sind.

3. Lagervorrichtung nach Anspruch 1 oder 2, dadurch gekennzeichnet, daß der Deckel (4) an der ersten Lagerbox durch ein oder mehrere Scharniere (6) befestigt ist, und daß das Scharnier oder die Scharniere drei Teile aufweisen, wobei das erste Teil an dem Deckel und das zweite Teil an der Box angebracht ist, während das dritte Teil schwenkbar mit dem ersten und dem zweiten Teil verbunden ist, wobei das dritte Teil durch eine Platte gebildet ist, deren Breite dem Abstand zwischen dem Außenrand des Tragegriffs und der Schwenkachse des zweiten Teils des Scharniers oder der Scharniere entspricht.

4. Lagervorrichtung nach den Ansprüchen 1 bis 3, dadurch gekennzeichnet, daß der Deckel (4) als ein Tablett mit einem Boden und vier Seitenwänden ausgebildet ist, die ein Fach bilden, das vollständig oder teilweise in mehrere kleinere Fächer unterteilt ist und/oder Einrichtungen zum Befestigen von Werkzeugen aufweist.

5. Lagervorrichtung nach den Ansprüchen 1 bis 4, dadurch gekennzeichnet, daß der Tragegriff (2) schwenkbar mit der ersten Box verbunden ist und eine Breite, die der Breite der Seitenwände des Deckels (4) entspricht, und eine Dicke aufweist, die dem Abstand zwischen der Außenseite der Deckelseitenwände und der Außenseite der ersten Box entspricht.

6. Lagervorrichtung nach einem der vorhergehenden Ansprüche, dadurch gekennzeichnet, daß der Deckel (4) eine reibungsmäßig bearbeitete Fläche auf der Außenfläche aufweist.

7. Lagervorrichtung nach einem der Ansprüche 2 bis 6, dadurch gekennzeichnet, daß Sicherungseinrichtungen für Zubehör durch Schlitze (3) ausgebildet sind, die zum Halten einer Säge, z. B. einer Handsäge, in einem oder mehreren der Beine der ersten Box dienen.

8. Lagervorrichtung nach den Ansprüchen 1-7, dadurch gekennzeichnet, daß der Deckel auf der ersten Box diese Box teilweise bedeckt, und daß die Fläche der ersten Box, die nicht von dem Deckel bedeckt ist, einen separaten Deckel (50) aufweist.

9. Lagervorrichtung nach den Ansprüchen 1-8, dadurch gekennzeichnet, daß das Fach der ersten Box mit einem in Fächer unterteilten Einsatz versehen ist, der in der Mitte ein Stützteil zum Zusammenwirken mit Eingreifeinrichtungen eines zusätzlichen in Fächer unterteilten Einsatzes aufweist.

10. Lagervorrichtung nach Anspruch 9, dadurch gekennzeichnet, daß das Stützteil zum Zusammenwirken mit einer Eingreifeirrichtung einer Stützvorrichtung, beispielsweise einem Kniepolster, vorgesehen ist.

11. Lagervorrichtung nach den Ansprüchen 1-10, dadurch gekennzeichnet, daß die zweite Lagerbox ebenfalls einen Deckel aufweist.

## Revendications

1. Dispositif de rangement, de préférence pour outils, comprenant :
a) une première et une seconde (7) boîte de rangement qui sont adaptées à être fixées l'une à l'autre,
b) la première boîte de rangement comportant une poignée de transport (2) et des pieds (8) et un couvercle (4) qui est fixé, de manière à pivoter, à la première boîte de rangement et recouvrant les compartiments de la boîte, et
c) la première boîte de rangement comportant une surface supérieure consistant en un siège, et
d) la seconde boîte de rangement (7) pouvant être fixée à la première boîte de rangement entre les pieds (8) sur le dessous de la première boîte
caractérisé en ce que
e) la première boîte de rangement est déplacée verticalement au-dessus de la seconde boîte de rangement lorsqu'elle est fixée à la seconde boîte de rangement, et
f) des moyens d'ancrage à chaque extrémité de la première boîte de rangement sont sollicités de manière que les moyens d'ancrage puissent s'ancrer par encliquetage sur un bord sur le dessous de la face inférieure de la seconde boîte de rangement.

2. Dispositif de rangement selon la revendication 1, caractérisé en ce que la première boîte de rangement comporte des moyens de fixation pour accessoires, lesdits moyens de fixation étant, de préférence, situés sur les pieds de la boîte.

3. Dispositif de rangement selon la revendication 1 ou 2, caractérisé en ce que le couvercle (4) est fixé à la première boîte de rangement par une ou plusieurs articulations (6), et en ce que l'articulation ou les articulations comprennent trois parties, la première partie étant fixée au couvercle, la deuxième partie étant fixée à la boîte, tandis que la troisième partie est reliée, de manière à pivoter, à la première partie et à la deuxième partie, ladite troisième partie étant formée par une plaque qui a une largeur correspondant à la distance entre le bord externe de la poignée de transport et un axe de pivotement de la deuxième partie de l'articulation ou des articulations.

4. Dispositif de rangement selon les revendications 1 à 3, caractérisé en ce que le couvercle (4) a la forme d'un plateau comportant une paroi inférieure et quatre parois latérales pour définir un compartiment qui est divisé entièrement ou en partie en une pluralité de compartiments plus petits et/ou comporte des moyens pour fixer des outils.

5. Dispositif de rangement selon les revendications 1 à 4, caractérisé en ce que la poignée de transport (2) est reliée, de manière à pivoter, à la première boîte et a une largeur correspondant à la largeur des parois latérales sur le couvercle (4) et une épaisseur correspondant à la distance entre la face externe des parois latérales du couvercle et la face externe de la première boîte.

6. Dispositif de rangement selon l'une quelconque des revendications précédentes, caractérisé en ce que le couvercle (4) comporte une face traitée antidérapante sur sa surface externe.

7. Dispositif de rangement selon l'une quelconque des revendications 2 à 6, caractérisé en ce que les moyens de fixation pour accessoires sont formés par des fentes (3) servant à fixer une scie, par exemple une scie à main, dans un ou plusieurs des pieds de la première boîte.

8. Dispositif de rangement selon les revendications 1 à 7, caractérisé en ce que le couvercle sur la première boîte recouvre en partie cette boîte, et en ce que la zone de la première boîte qui n'est pas recouverte par le couvercle comporte un couvercle distinct (50).

9. Dispositif de rangement selon les revendications 1 à 8, caractérisé en ce que le compartiment de la première boîte est doté d'une pièce encastrée à compartiments qui comporte centralement une pièce de support pour coopération avec un moyen d'engagement sur une pièce encastrée à compartiments supplémentaire.

10. Dispositif de rangement selon la revendication 9, caractérisé en ce que la pièce de support est adaptée à coopérer avec un moyen d'engagement sur un dispositif de support, par exemple un repose-genoux.

11. Dispositif de rangement selon les revendications 1 à 10, caractérisé en ce que la seconde boîte de rangement comporte également un couvercle.
